# EUROPÄISCHE PATENTSCHRIFT

(11) **EP 3 658 764 B1**
(45) Veröffentlichungstag und Bekanntmachung des Hinweises auf die Patenterteilung: **05.05.2021**
(21) Anmeldenummer: 18742790.1
(22) Anmeldetag: 18.07.2018
(51) Int. Cl.: F02M 21/02, F16K 31/06, F16K 39/02, F16K 41/10

(54) **DOSIERVENTIL FÜR EINEN GASFÖRMIGEN BRENNSTOFF**
DOSING VALVE FOR A GASEOUS FUEL
VANNE DE DOSAGE POUR UN COMBUSTIBLE GAZEUX

(30) Priorität: 25.07.2017 DE 102017212756
(43) Veröffentlichungstag der Anmeldung: 03.06.2020
(73) Patentinhaber: Robert Bosch GmbH, 70442 Stuttgart (DE)
(72) Erfinder: ZEHETBAUER, Thomas, 4101 Feldkirchen an der Donau (AT); WINKLER, Bernd, 4490 St. Florian (AT); PLOECKINGER, Andreas, 4623 Gunskirchen (AT)
(86) Internationale Anmeldenummer: PCT/EP2018/069491
(87) Internationale Veröffentlichungsnummer: WO 2019/020452

(56) Entgegenhaltungen:
- EP-A1- 1 872 007
- DE-A1-102009 002 836
- DE-A1-102014 212 320
- DE-T5- 10 196 925
- US-A- 4 240 266
- US-A- 4 442 998

## Beschreibung

Die Erfindung betrifft ein Dosierventil für einen gasförmigen Brennstoff mit den Merkmalen des Anspruchs 1.

Bevorzugter Einsatzbereich des vorgeschlagenen Dosierventils ist die Brennstoffversorgung einer Verbrennungskraftmaschine, wobei es sich insbesondere um einen Gasmotor oder einen Gas-Diesel-Motor eines Fahrzeugs, beispielsweise eines Personenkraftfahrzeugs, eines Nutzfahrzeugs, eines Schienenfahrzeugs oder eines Schiffs handeln kann. Neben mobilen Anwendungen ist auch der Einsatz des Dosierventils in stationären Anlagen zur Energiegewinnung oder Energieerzeugung vorstellbar.

### Stand der Technik

Aus der Offenlegungsschrift DE 10 2009 002 836 A1 ist ein Gasventil, insbesondere ein Dosierventil für ein gasförmiges Medium, bekannt, das ein plattenförmiges Ventilsitzelement und einen in Bezug auf das Ventilsitzelement hubbeweglichen Schließkörper zum Freigeben und Verschließen einer im Ventilsitzelement ausgebildeten Durchströmöffnung aufweist. Der Schließkörper wirkt dabei mit einem ringförmigen Dichtsitz des Ventilsitzelements zusammen, gegen den der Schließkörper mittels der Federkraft einer Feder axial vorgespannt ist. Das Öffnen des Gasventils wird mittels eines Elektromagneten bewirkt. Um eine möglichst exakte Brennstoffdosierung bei wechselnden Druckverhältnissen zu gewährleisten, ist das Gasventil druckausgeglichen ausgeführt. Der Schließkörper ist hierzu mit einer flexiblen Trennwand in Form eines Wellbalgs verbunden, der gemeinsam mit dem Schließkörper einen zulaufseitig angeordneten Rückraum begrenzt. Der zulaufseitige Rückraum ist über einen im Schließkörper ausgebildeten Verbindungskanal mit der Abströmseite des Gasventils verbunden, so dass auf beiden Seiten des Schließkörpers der gleiche Gasdruck herrscht. Die flexible Trennwand ist zudem in der Weise am Schließkörper festgelegt, dass ein den Rückraum begrenzender Oberflächenabschnitt auf der einen Seite des Schließkörpers annähernd gleich groß ist wie ein von dem Dichtsitz eingegrenzter Oberflächenabschnitt auf der dem Ventilsitzelement zugekehrten anderen Seite des Schließkörpers. In Öffnungs- und in Schließrichtung wirken demnach gleich große Axialkräfte, so dass sich diese gegenseitig in ihrer Wirkung auf den Schließkörper aufheben. Der Ventilhub beim Öffnen des Gasventils ist somit unabhängig von den im Gasventil vorherrschenden Druckverhältnissen

Weitere druckausgeglichene Ventile sind aus DE 10 2014 212320 A1, US 4442998 A und US 4240266 A bekannt.

Der vorliegenden Erfindung liegt die Aufgabe zugrunde, ein Dosierventil für ein gasförmiges Medium anzugeben, das eine Kompensation einer auf Druckdifferenzen zurückzuführenden pneumatischen Schließkraft ermöglicht und zudem besonders kompaktbauend ist. Die Kompensation der pneumatischen Schließkraft soll dazu beitragen, dass ein effizienteres und kostengünstigeres Aktordesign realisiert werden kann.

Zur Lösung der Aufgabe wird das Dosierventil mit den Merkmalen des Anspruchs 1 vorgeschlagen. Vorteilhafte Weiterbildungen der Erfindung sind den Unteransprüchen zu entnehmen.

### Offenbarung der Erfindung

Das vorgeschlagene Dosierventil umfasst ein plattenförmiges Ventilsitzelement mit mindestens einer Durchströmöffnung für den gasförmigen Brennstoff, ein dichtend mit dem Ventilsitzelement zusammenwirkendes, hubbewegliches Schließelement zum Freigeben und Verschließen der mindestens einen Durchströmöffnung und einen einen Kompensationsraum (6) begrenzenden und mit dem Schließelement verbundenen Well- oder Faltenbalg. Der Kompensationsraum ist über eine im Schließelement ausgebildete Ausnehmung mit einem Druckraum verbunden, so dass unabhängig von der Schaltstellung des Dosierventils in beiden Räumen der gleiche Gasdruck herrscht, wobei bei geöffnetem Dosierventil gasförmiger Brennstoff aus dem Druckraum über die mindestens eine Durchströmöffnung abströmt.

Erfindungsgemäß ist der Kompensationsraum auf der dem Ventilsitzelement zugewandten Seite des Schließelements angeordnet und wird in axialer Richtung von einer Druckfläche begrenzt, die am Schließelement oder an einem mit dem Schließelement verbundenen Flanschbauteil, ausgebildet ist.

Bei einem Anstieg des Gasdrucks im Druckraum, steigt gleichzeitig der Gasdruck im Kompensationsraum an. Dies führt zu einer unmittelbar oder mittelbar auf das Schließelement wirkenden pneumatischen Druckkraft, die - aufgrund der Lage des Kompensationsraums - in Öffnungsrichtung wirkt. Das heißt, dass über den Kompensationsraum eine Gegenkraft zu einer in Schließrichtung wirkenden pneumatischen Kraft erzeugbar ist, die zu einer teilweisen oder vollständigen Aufhebung der Schließkraft führt.

Das Maß der Kompensation hängt vom Flächenverhältnis der in diesem Zusammenhang relevanten Flächen ab. Hierbei handelt es sich zum Einen um die unmittelbar oder mittelbar am Schließelement ausgebildete Druckfläche zur Begrenzung des Kompensationsraums. Zum Anderen um eine am Schließelement ausgebildete Druckfläche, die auf der dem Kompensationsraum abgewandten Seite des Schließelements ausgebildet bzw. dem Druckraum zugewandt ist. Das Flächenverhältnis entscheidet, ob die über den Druckraum indizierte, schließend wirkende pneumatische Druckkraft reduziert, ausgeglichen oder sogar überschritten wird, um eine zusätzliche öffnend wirkende Kraft zu erzeugen.

Vorzugsweise wird über die Kompensationswirkung ein vollständiger Druckausgleich bewirkt, so dass ein druckausgeglichenes Dosierventil bzw. ein Dosierventil mit einem druckausgeglichenen Schließelement geschaffen wird. Dies hat den Vorteil, dass zum Einen die zum Öffnen erforderliche Öffnungskraft gering ist, zum Anderen das Dosierventil sicher schließt.

Die Erfindung besitzt ferner den Vorteil, dass bei Einsatz des gleichen Standardmagneten größere Ventilbaugruppen realisierbar sind. Alternativ kann die Ventilgröße beibehalten werden, so dass höhere maximal schaltbare Druckdifferenzen möglich sind. In jedem Fall vergrößert sich der Anwendungsbereich eines Standard- bzw. Serienmagneten, so dass ein effizientes und kostengünstiges Aktorkonzept zur Verfügung gestellt wird.

Gemäß einer bevorzugten Ausführungsform der Erfindung ist das Schließelement im Wesentlichen plattenförmig ausgeführt. Die Plattenform des Schließelements ermöglicht eine besonders kompakt bauende Anordnung, insbesondere in axialer Richtung, so dass der Bauraumbedarf des Dosierventils gesenkt werden kann. Um ein gleichmäßiges Anströmen der mindestens einen im Ventilsitzelement ausgebildeten Durchströmöffnung bei geöffnetem Dosierventil zu ermöglichen, wird vorgeschlagen, dass im plattenförmigen Schließelement ebenfalls mindestens eine Durchströmöffnung angeordnet ist, die versetzt zur Durchströmöffnung des Ventilsitzelements angeordnet ist.

Alternativ oder ergänzend wird vorgeschlagen, dass das vorzugsweise plattenförmige Schließelement auf der dem Ventilsitzelement abgewandten Seite eine dem Druckraum zugewandte Druckfläche aufweist. Das heißt, dass das Schließelement über die Druckfläche angeströmt wird. In Abhängigkeit von der Größe der dem Druckraum zugewandten Druckfläche kann dann - ja nach zu erreichendem Kompensationsgrad - die Größe der den Kompensationsraum begrenzenden Druckfläche gewählt werden.

Des Weiteren bevorzugt durchgreift bzw. durchgreifen das Schließelement und/oder das mit dem Schließelement verbundene Bauteil das Ventilsitzelement. Beispielsweise kann das Schließelement einen kragenförmigen Ansatz aufweisen, der durch eine Ausnehmung des Ventilsitzelements geführt ist, um die notwendige Verbindung des Schließelements mit dem Well- oder Faltenbalg herzustellen. Um die Montage zu vereinfachen, kann das Schließelement auch mehrteilig ausgeführt sein bzw. mit einem weiteren Bauteil, insbesondere einem Flanschbauteil, verbunden sein. Der kragenförmige Ansatz bzw. das Flanschbauteil ermöglichen die Ausbildung einer ausreichend großen Druckfläche, so dass sichergestellt ist, dass die hierüber erzeugte Gegenkraft groß genug ist, um die gewünschte Kompensation zu erreichen.

Vorteilhafterweise ist der der Begrenzung des Kompensationsraums dienende Well- oder Faltenbalg zumindest abschnittsweise in einer zentralen Ausnehmung des Ventilsitzelements aufgenommen. Dadurch kann weiterhin Bauraum eingespart werden.

Ferner wird vorgeschlagen, dass der Well- oder Faltenbalg an seinem dem Schließelement abgewandten Ende mit einer den Kompensationsraum begrenzenden Platte verbunden ist. Die Platte dichtet den Kompensationsraum gegen die Umgebung ab.

Um sicherzustellen, dass ein Anstieg des Gasdrucks im Kompensationsraum zu einer auf das Schließelement in Öffnungsrichtung wirkenden pneumatischen Druckkraft führt, wird vorgeschlagen, dass der Well- oder Faltenbalg an seinem dem Schließelement abgewandten Ende unmittelbar oder mittelbar über die Platte an einer Anschlagfläche axial abgestützt ist. Die Anschlagfläche kann beispielsweise durch das Ventilsitzelement oder ein mit dem Ventilsitzelement verbundenes Anschlagelement ausgebildet werden.

In Weiterbildung der Erfindung wird vorgeschlagen, dass der Well- oder Faltenbalg an seinem dem Schließelement abgewandten Ende unmittelbar oder mittelbar über die Platte mit dem Ventilsitzelement fest verbunden ist. Auf diese Weise wird eine in zwei Richtungen wirksame Kompensationseinrichtung geschaffen. Das heißt, dass nicht nur eine Gegenkraft zu einer in Schließrichtung wirkenden pneumatischen Druckkraft erzeugbar ist, sondern ferner eine Gegenkraft zu einer in Öffnungsrichtung auf das Schließelement wirkenden pneumatischen Druckkraft. Ein "doppelt wirkender" Well- oder Faltenbalg hält zudem höheren Gegendrücken stand, ohne das Ventil zu öffnen.

Vorausgesetzt, dass der Well- oder Faltenbalg doppelt wirkt, kann dieser zugleich ein Federelement ausbilden, das axial vorspannbar oder axial vorgespannt ist. Der doppelt wirkende Well- oder Faltenbalg macht somit den Verzicht auf eine oder mehrere Rückstellfedern zur Rückstellung des Schließelements möglich. Die Federsteifigkeit des Well- oder Faltenbalgs wird dabei durch seine geometrischen Abmessungen beeinflusst. Ist die prinzipielle Geometrie des Well- oder Faltenbalgs aufgrund der Anforderungen (mechanische Belastbarkeit, Drücke und dergleichen) festgelegt, kann die Federsteifigkeit über die Anzahl der Wellen bzw. Falten verändert werden.

Bevorzugt sind die den Kompensationsraum begrenzende Druckfläche und die dem Druckraum zugewandte Druckfläche des Schließelements in radialer Richtung zumindest teilweise überlappend angeordnet. Das heißt, dass in radialer Richtung die über den Kompensationsraum erzeugte Gegenkraft im Bereich der zu kompensierenden pneumatischen Druckkraft angreift. Auf diese Weise wird eine Biegebeanspruchung des Schließelements vermieden, so dass dieses beispielsweise als dünnes Plättchen ausgebildet werden kann.

Darüber hinaus wird vorgeschlagen, dass ein Elektromagnet zur Einwirkung auf einen mit dem Schließelement verbundenen oder durch das Schließelement ausgebildeten

Anker vorgesehen ist. Das erfindungsgemäße Dosierventil ist demnach bevorzugt elektromagnetisch betätigbar, wobei weiterhin bevorzugt ein Standard- bzw. Serienmagnet zum Einsatz gelangt. Bei einer Bestromung des Elektromagneten baut sich ein Magnetfeld auf, das eine auf den Anker einwirkende Magnetkraft erzeugt. Der Anker bewegt sich in Richtung des Elektromagneten. Ist der Anker als ein eigenständiges Bauteil ausgeführt ist, das mit dem Schließelement verbunden ist, führt er das Schließelement mit, so dass dieses vom Ventilsitzelement abhebt und die mindestens eine Durchströmöffnung freigibt. Bildet das Schließelement zugleich den Anker aus, wird das Schließelement durch die Magnetkraft in Richtung des Elektromagneten gezogen. Die integrierte Ankerfunktion des Schließelements führt zu einer besonders kompakt bauenden Bauform eines erfindungsgemäßen Dosierventils.

Bevorzugte Ausführungsformen der Erfindung werden nachfolgend anhand der beigefügten Zeichnungen näher erläutert. Diese zeigen:
Fig. 1 einen schematischen Längsschnitt durch ein erfindungsgemäßes Dosierventil gemäß einer ersten bevorzugten Ausführungsform,
Fig. 2 einen schematischen Längsschnitt durch ein erfindungsgemäßes Dosierventil gemäß einer zweiten bevorzugten Ausführungsform,
Fig. 3a und 3b einen schematischen Längsschnitt durch ein erfindungsgemäßes Dosierventil gemäß einer dritten bevorzugten Ausführungsform und
Fig. 4a und 4b einen schematischen Längsschnitt durch ein erfindungsgemäßes Dosierventil gemäß einer vierten bevorzugten Ausführungsform.

### Ausführliche Beschreibung der Zeichnungen

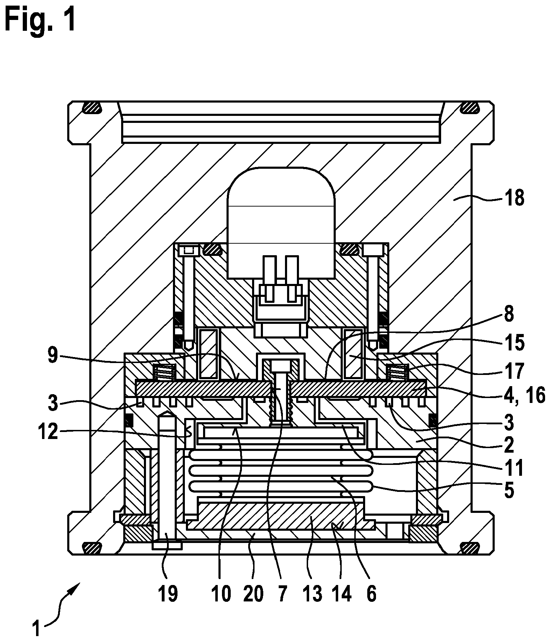

Das in der Fig. 1 dargestellte Dosierventil 1 dient dem Eindosieren eines gasförmigen Brennstoffs in einen Ansaugtrakt einer Verbrennungskraftmaschine. Es umfasst ein zumindest abschnittsweise hohlzylinderförmiges Gehäuseteil 18, in das ein plattenförmiges Ventilsitzelement 2 mit mehreren konzentrisch angeordneten, kreisbogenförmigen Durchströmöffnungen 3 eingesetzt ist. Oberhalb des Ventilsitzelements 2 ist ein als dünnes Plättchen ausgebildetes, hubbewegliches Schließelement 4 angeordnet, das in Schließstellung die Durchströmöffnungen 3 verschließt. Über Federn 17 ist da Schließelement 4 gegen das Ventilsitzelement 2 axial vorgespannt.

Das plättchenförmige Schließelement 4 bildet vorliegend zugleich einen Anker 16 aus, so dass Bauraum eingespart wird. Zur Einwirkung auf den Anker 17 bzw. das Schließelement 4 ist ein Elektromagnet 15 vorgesehen, der oberhalb des Schließelements 4 angeordnet ist. Wird der Elektromagnet 15 bestromt, bewegt sich das Schließelement 4 entgegen der Federkraft der Federn 17 in Richtung des Elektromagneten 15 und das Dosierventil 1 öffnet. Über die Durchströmöffnungen 3 strömt somit gasförmiger Brennstoff aus einem Druckraum 8 ab. Wird die Bestromung des Elektromagneten 15 beendet, stellen die Federn 17 das Schließelement 4 in seine Ausgangslage zurück.

Das Schließelement 4 weist eine dem Druckraum 8 zugewandte Druckfläche 9 auf, an welcher der im Druckraum 8 vorherrschende Gasdruck anliegt. Steigt bei geschlossenem Dosierventil 1 der Gasdruck im Druckraum 8 an, führt dies zu Druckdifferenzen, die eine auf das Schließelement 4 in Schließrichtung wirkende pneumatische Drucckraft zur Folge hat. Damit steigt die zum Öffnen des Dosierventils 1 erforderliche Öffnungskraft, so dass ggf. die Magnetkraft des Elektromagneten 15 nicht mehr ausreicht.

Um dies zu verhindern, weist das dargestellte erfindungsgemäße Dosierventil 1 einen Kompensationsraum 6 auf, der auf der dem Druckraum 8 abgewandten Seite des Schließelements 4 angeordnet und über eine im Schließelement 4 ausgebildete zentrale Ausnehmung 7 mit dem Druckraum 8 verbunden ist. Im Kompensationsraum 6 herrscht somit der gleiche Gasdruck wie im Druckraum 8. Der Kompensationsraum 6 wird in radialer Richtung von einem Wellbalg 5 begrenzt, der über eine Bauteil 11 in Form eines Flanschbauteils fest mit dem Schließelement 4 verbunden ist. Dies hat zur Folge, dass über eine am Flanschbauteil ausgebildete Druckfläche 10 eine in Öffnungsrichtung auf das Schließelement 4 wirkende pneumatische Druckkraft bewirkbar ist, die eine Gegenkraft zur Schließkraft darstellt. Denn andernends ist der Wellbalg 5 über eine Platte 13 an einer Anschlagfläche 14 eines Anschlagelements 20 abgestützt, das mittels eines Befestigungselements 19 mit dem Ventilsitzelement 2 fest verbunden ist. Steigt der Gasdruck im Kompensationsraum 6 entsprechend dem Gasdruck im Druckraum 8 an, wird eine zumindest teilweise Kompensation der auf das Schließelement 4 wirkenden pneumatischen Kräfte bewirkt. Das Maß der Kompensation hängt dabei vom Flächenverhältnis der Druckflächen 9, 10 ab.

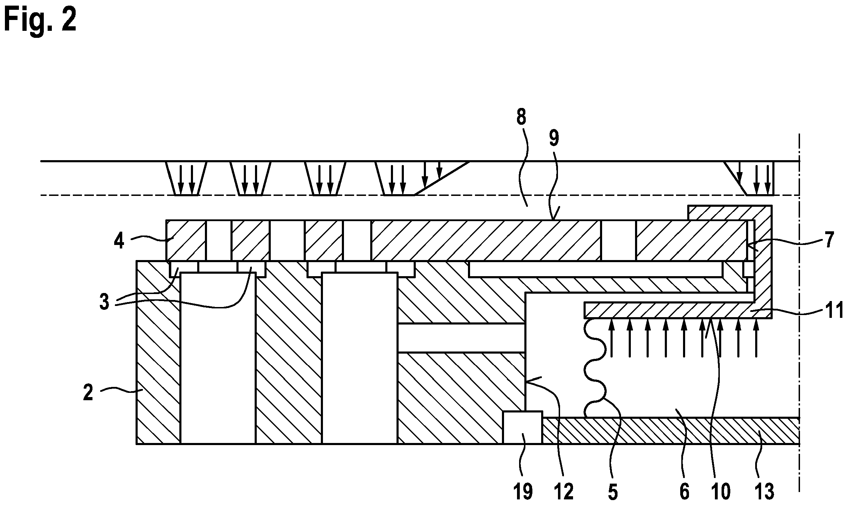

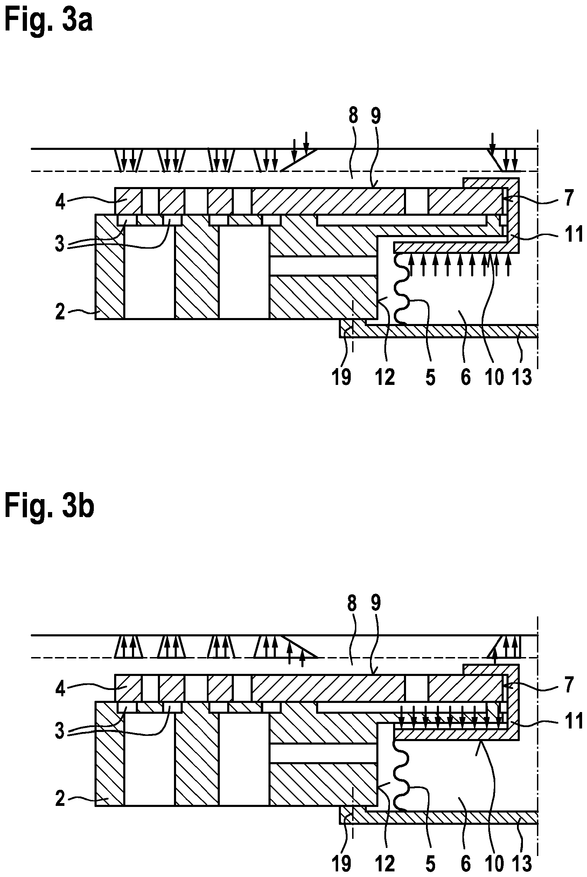

Der Fig. 2 ist eine Abwandlung des Dosierventils 1 der Fig. 1 zu entnehmen. Der Wellbalg 5 ist in diesem Beispiel vollständig in einer zentralen Ausnehmung 12 des Ventilsitzelements 2 aufgenommen und über eine Platte 13 und ein Befestigungselement 19 fest mit dem Ventilsitzelement 2 verbunden. Die Vorteile einer beidseitigen Fixierung des Wellbalgs 5 werden nachfolgend in Zusammenhang mit dem Ausführungsbeispiel der Figuren 3a und 3b erläutert, das ein ähnliches Beispiel zeigt.

Der Fig. 2 ist eine auf das Schließelement 4 wirkende Schließkraft zu entnehmen, die das Schließelement 4 in Richtung des Ventilsitzelements 2 drückt. Diese Schließkraft wird zumindest in Teilen durch eine Gegenkraft kompensiert, die mittelbar über eine an einem Flanschbauteil 11 ausgebildete Druckfläche 10 auf das Schließelement 4 wirkt. Das Flanschbauteil 11 ist hierzu einerseits mit dem Schließelement 4, andererseits mit dem Wellbalg 5 fest verbunden. Dabei durchgreift es die im Schließelement 4 ausgebildete zentrale Ausnehmung 7. Da im Kompensationsraum 6 und im Druckraum 8 der gleiche Gasdruck herrscht, wird das Maß der Kompensation über das Flächenverhältnis der beiden Druckflächen 9, 10 bestimmt.

Das Ausführungsbeispiel der Figuren 3a und 3b ist im Wesentlichen gleich dem der Fig. 2 ausgeführt. Ein Unterschied besteht lediglich in der Befestigung der Platte 13 am Ventilsitzelement 2.

Fig. 3a zeigt das Wirkprinzip der Kompensation über den Wellbalg 5 bei einer auf das Schließelement 4 wirkenden Schließkraft. Fig. 3b zeigt eine Kompensation in umgekehrter Richtung, das heißt bei eine pneumatischen Druckkraft, die in Öffnungsrichtung auf das Schließelement 4 wirkt. Denn auch in diesem Fall wird eine zumindest teilweise Kompensation erreicht, sofern der Wellbalg 5 an seinem dem Schließelement 4 abgewandten Ende unmittelbar oder mittelbar am Ventilsitzelement 2 oder einem Gehäuseteil fixiert ist.

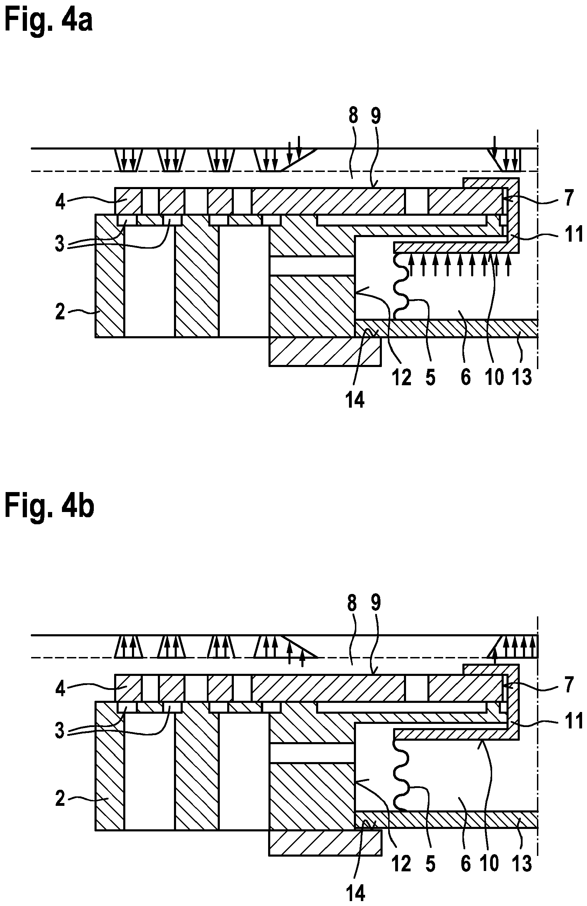

Erfolgt eine solche Fixierung nicht, wie beispielshaft in den Figuren 4a und 4b dargestellt, kann zwar eine Kompensation der Schließkraft bewirkt werden (Fig. 4a), nicht jedoch eine Kompensation einer Öffnungskraft, da in diesem Fall die Platte 13 von der Anschlagfläche 14 abhebt (Fig. 4b).

## Patentansprüche

1. Dosierventil (1) für einen gasförmigen Brennstoff, umfassend ein plattenförmiges Ventilsitzelement (2) mit mindestens einer Durchströmöffnung (3) für den gasförmigen Brennstoff, ein dichtend mit dem Ventilsitzelement (2) zusammenwirkendes, hubbewegliches Schließelement (4) zum Freigeben und Verschließen der mindestens einen Durchströmöffnung (3) und einen einen Kompensationsraum (6) begrenzenden und mit dem Schließelement (4) verbundenen Well- oder Faltenbalg (5), der über eine im Schließelement (4) ausgebildete Ausnehmung (7) mit einem Druckraum (8) verbunden ist, so dass unabhängig von der Schaltstellung des Dosierventils (1) im Kompensationsraum (6) und im Druckraum (8) der gleiche Gasdruck herrscht, wobei bei geöffnetem Dosierventil (1) gasförmiger Brennstoff aus dem Druckraum (8) über die mindestens eine Durchströmöffnung (3) abströmt,
**dadurch gekennzeichnet, dass** der Kompensationsraum (6) auf der dem Ventilsitzelement (2) zugewandten Seite des Schließelements (4) angeordnet ist und in axialer Richtung von einer Druckfläche (10) begrenzt wird, die am Schließelement (4) oder an einem mit dem Schließelement (4) verbundenen Flanschbauteil (11) ausgebildet ist.

2. Dosierventil (1) nach Anspruch 1,
**dadurch gekennzeichnet, dass** das Schließelement (4) im Wesentlichen plattenförmig ausgeführt ist und/oder auf der dem Ventilsitzelement (2) abgewandten Seite eine dem Druckraum (8) zugewandte Druckfläche (9) aufweist.

3. Dosierventil (1) nach Anspruch 1 oder 2,
**dadurch gekennzeichnet, dass** das Schließelement (4) und/oder das mit dem Schließelement (4) verbundene Bauteil (11) das Ventilsitzelement (2) durchgreift bzw. durchgreifen.

4. Dosierventil (1) nach einem der vorhergehenden Ansprüche,
**dadurch gekennzeichnet, dass** der Well- oder Faltenbalg (5) zumindest abschnittsweise in einer zentralen Ausnehmung (12) des Ventilsitzelements (2) aufgenommen ist.

5. Dosierventil (1) nach einem der vorhergehenden Ansprüche,
**dadurch gekennzeichnet, dass** der Well- oder Faltenbalg (5) an seinem dem Schließelement (4) abgewandten Ende mit einer den Kompensationsraum (6) begrenzenden Platte (13) verbunden ist.

6. Dosierventil (1) nach Anspruch 5,
**dadurch gekennzeichnet, dass** der Well- oder Faltenbalg (5) an seinem dem Schließelement (4) abgewandten Ende unmittelbar oder mittelbar über die Platte (13) an einer Anschlagfläche (14) axial abgestützt ist.

7. Dosierventil (1) nach Anspruch 5,
**dadurch gekennzeichnet, dass** der Well- oder Faltenbalg (5) an seinem dem Schließelement (4) abgewandten Ende unmittelbar oder mittelbar über die Platte (13) mit dem Ventilsitzelement (2) fest verbunden ist.

8. Dosierventil (1) nach einem der Ansprüche 2 bis 7,
**dadurch gekennzeichnet, dass** der Well- oder Faltenbalg (5) ein axial vorspannbares oder axial vorgespanntes Federelement ausbildet.

9. Dosierventil (1) nach einem der vorhergehenden Ansprüche,
**dadurch gekennzeichnet, dass** die den Kompensationsraum (6) begrenzende Druckfläche (10) und die dem Druckraum (8) zugewandte Druckfläche (9) des Schließelements (4) in radialer Richtung zumindest teilweise überlappend angeordnet sind.

10. Dosierventil (1) nach einem der vorhergehenden Ansprüche,
**dadurch gekennzeichnet, dass** ein Elektromagnet (15) zur Einwirkung auf einen mit dem Schließelement (4) verbundenen oder durch das Schließelement (4) ausgebildeten Anker (16) vorgesehen ist.

## Claims

1. Dosing valve (1) for a gaseous fuel, comprising a plate-like valve seat element (2), which has at least one throughflow opening (3) for the gaseous fuel, a closure element (4), which interacts sealingly with the valve seat element (2) and is able to perform stroke movements and which serves for opening up and closing off the at least one throughflow opening (3), and a corrugated or fold bellows (5), which is connected to the closure element (4) and which delimits a compensation space (6), and is connected to a pressure space (8) via a cutout (7) formed in the closure element (4), so that the same gas pressure prevails in the compensation space (6) and in the pressure space (8) irrespective of the switching position of the dosing valve (1), wherein, with an open dosing valve (1), gaseous fuel flows out of the pressure space (8) via the at least one throughflow opening (3),
**characterized in that** the compensation space (6) is arranged on that side of the closure element (4) facing the valve seat element (2) and is delimited in an axial direction by a pressure surface (10) which is formed on the closure element (4) or on a flange component (11) connected to the closure element (4).

2. Dosing valve (1) according to Claim 1,
**characterized in that** the closure element (4) is of substantially plate-like form and/or has, on the side facing away from the valve seat element (2), a pressure surface (9) facing the pressure space (8).

3. Dosing valve (1) according to Claim 1 or 2, **characterized in that** the closure element (4) and/or the component (11) connected to the closure element (4) extend(s) through the valve seat element (2).

4. Dosing valve (1) according to one of the preceding claims,
**characterized in that** the corrugated or fold bellows (5) is received at least sectionally in a central cutout (12) in the valve seat element (2).

5. Dosing valve (1) according to one of the preceding claims,
**characterized in that** the corrugated or fold bellows (5) is, at its end facing away from the closure element (4), connected to a plate (13) which delimits the compensation space (6).

6. Dosing valve (1) according to Claim 5,
**characterized in that** the corrugated or fold bellows (5) is, at its end facing away from the closure element (4), axially supported against a stop surface (14) directly or indirectly via the plate (13).

7. Dosing valve (1) according to Claim 5,
**characterized in that** the corrugated or fold bellows (5) is, at its end facing away from the closure element (4), fixedly connected to the valve seat element (2) directly or indirectly via the plate (13).

8. Dosing valve (1) according to one of Claims 2 to 7,
**characterized in that** the corrugated or fold bellows (5) forms an axially preloadable or axially preloaded spring element.

9. Dosing valve (1) according to one of the preceding claims,
**characterized in that** the pressure surface (10) delimiting the compensation space (6) and the pressure surface (9), facing the pressure space (8), of the closure element (4) are arranged so as to be at least partially overlapping in a radial direction.

10. Dosing valve (1) according to one of the preceding claims,
**characterized in that** provision is made of an electromagnet (15) for acting on an armature (16) which is connected to the closure element (4) or which is formed by the closure element (4).

## Revendications

1. Vanne de dosage (1) pour un combustible gazeux, comprenant un élément de siège de vanne en forme de plaque (2) doté d'au moins un orifice de passage d'écoulement (3) pour le combustible gazeux, un élément de fermeture (4) à mouvement de va-et-vient, coopérant en étanchéité avec l'élément de siège de vanne (2) et destiné à libérer et à obturer ledit au moins un orifice de passage d'écoulement (3), et un soufflet ondulé ou à plis (5) délimitant une chambre de compensation (6) et relié à l'élément de fermeture (4), qui est relié à une chambre de pression (8) par un évidement (7) réalisé dans l'élément de fermeture (4), de sorte qu'indépendamment de la position de commutation de la vanne de dosage (1), la même pression de gaz règne dans la chambre de compensation (6) et dans la chambre de pression (8), dans laquelle, lorsque la vanne de dosage (1) est ouverte, un combustible gazeux s'échappe de la chambre de pression (8) par ledit au moins un orifice de passage d'écoulement (3),
**caractérisée en ce que** la chambre de compensation (6) est disposée sur le côté, tourné vers l'élément de siège de vanne (2), de l'élément de fermeture (4) et est délimitée dans la direction axiale par une surface de pression (10) qui est réalisée au niveau de l'élément de fermeture (4) ou d'un composant de bride (11) relié à l'élément de fermeture (4).

2. Vanne de dosage (1) selon la revendication 1,
**caractérisée en ce que** l'élément de fermeture (4) est réalisé substantiellement en forme de plaque, et/ou présente une surface de pression (9), tournée vers la chambre de pression (8), sur le côté détourné de l'élément de siège de vanne (2).

3. Vanne de dosage (1) selon la revendication 1 ou 2,
**caractérisée en ce que** l'élément de fermeture (4) et/ou le composant (11) relié à l'élément de fermeture (4) traverse(nt) l'élément de siège de vanne (2).

4. Vanne de dosage (1) selon l'une quelconque des revendications précédentes, **caractérisée en ce que** le soufflet ondulé ou à plis (5) est reçu au moins par endroits dans un évidement central (12) de l'élément de siège de vanne (2).

5. Vanne de dosage (1) selon l'une quelconque des revendications précédentes, **caractérisée en ce que** le soufflet ondulé ou à plis (5) est relié au niveau de son extrémité, détournée de l'élément de fermeture (4), à une plaque (13) délimitant la chambre de compensation (6) .

6. Vanne de dosage (1) selon la revendication 5,
**caractérisée en ce que** le soufflet ondulé ou à plis (5) est soutenu axialement au niveau d'une surface de butée (14), directement ou indirectement par l'intermédiaire de la plaque (13), à son extrémité détournée de l'élément de fermeture (4).

7. Vanne de dosage (1) selon la revendication 5,
**caractérisée en ce que** le soufflet ondulé ou à plis (5) est relié solidement à l'élément de siège de vanne (2), directement ou indirectement par l'intermédiaire de la plaque (13), à son extrémité détournée de l'élément de fermeture (4).

8. Vanne de dosage (1) selon l'une quelconque des revendications 2 à 7, **caractérisée en ce que** le soufflet ondulé ou à plis (5) réalise un élément faisant ressort pouvant être axialement précontraint ou étant axialement précontraint.

9. Vanne de dosage (1) selon l'une quelconque des revendications précédentes, **caractérisée en ce que** la surface de pression (10) délimitant la chambre de compensation (6) et la surface de pression (9), tournée vers la chambre de pression (8), de l'élément de fermeture (4) sont disposées en se chevauchant au moins partiellement dans la direction radiale.

10. Vanne de dosage (1) selon l'une quelconque des revendications précédentes, **caractérisée en ce qu'**un électroaimant (15) est prévu pour agir sur un induit (16) relié à l'élément de fermeture (4) ou réalisé par l'élément de fermeture (4).
